# EUROPEAN PATENT APPLICATION

(11) **EP 1 187 498 A2**
(43) Date of publication of application: **13.03.2002**
(21) Application number: 01306625.3
(22) Date of filing: 02.08.2001
(51) Int. Cl.: H04Q 3/00

(54) **Method and apparatus for storing telephone information**

(30) Priority: 08.09.2000 US 658568
(71) Applicant: AT&T Corp., New York, NY 10013-2412 (US)
(72) Inventor: Becker, Richard Alan, Mendham, New Jersey 07960 (US); Wilks, Allan Reeve, Scotch Plains, New Jersey 07076 (US)
(74) Representative: Asquith, Julian Peter

(57) **Abstract**

A method and apparatus for storing information regarding a telephone is disclosed. A pointer is stored in an entry of a first look-up table wherein the line number of the entry is indexed by a first group of sequential digits, for example, the first six digits, of a telephone number of the telephone. Information regarding the telephone is stored in one of a plurality of second look-up tables, each table comprised of a plurality of entries wherein each entry is indexed by a second group of sequential digits, for example, the last four digits, of the telephone number, wherein the pointer indicates an address of the one of a plurality of second look-up tables wherein an entry with a line number specified by the last four digits of the telephone comprises information regarding the telephone.

## Description

### Field of the Invention

The invention relates to a method and apparatus for storing information, and particularly to a method and apparatus for storing information related to or concerning a telephone number in a telecommunication system.

### Background of the Invention

Because immediate access to information has become a necessity in virtually all fields of endeavor, including business, finance and science, telecommunication system usage is increasing at a substantial rate. With the increase in overall usage, however, the amount of information generated by the telecommunication systems has exploded. Typically, each call made on a telecommunication system generates a variety of information, for example, billing information and other information regarding each specific call. All of this information can be analyzed, for example, to detect trends and characteristics of each telephone number. For example, the calling pattern for a telephone number can be analyzed to determine whether the telephone number is for a telephone of a business or for a telephone in a residence, since telephones in a business and telephones in a residence have different calling patterns. For example, telephone calls made from a residence tend to be longer in duration and made in the evenings or on weekends.

Alternatively, the business/residence status can be determined by the way a customer signs up for telephone service. Thus, the business/ residence status most often can be determined by reviewing administrative records. In either case, once the status has been determined, it may be desirable to store the information in a database for easy access.

One option for storing the data would be to create a database wherein one bit is assigned for each telephone number, wherein the bit indicates a certain characteristic of the telephone. However, in the North American Numbering plan, each telephone is assigned a 10 digit number NPA-NXX-XXXX. Thus, the database would have to have a bit for each of the ten billion possible 10-digit telephone numbers available in the North American Numbering plan. Thus, the resulting database would occupy approximately 1.1 GB. A database of such a size would be very cumbersome.

### Summary of the Invention

It is an object of the present invention to provide a new method and apparatus for storing results of analysis of each ANI in a telecommunications system in such a manner that the data can be both quickly and easily accessed and stored compactly.

According to one embodiment of the invention, an apparatus for storing information regarding a telephone is disclosed. A first look-up table comprises a plurality of entries wherein each entry is indexed by a first group of sequential digits, for example, the first six digits, of a telephone number. A plurality of second look-up tables comprising a plurality of entries wherein each entry is indexed by a second group of sequential digits, for example, the last four digits, of the telephone number, wherein at least one of said entries in said first look-up table comprises a pointer indicating the address of one of said plurality of second look-up tables, wherein an entry with a line number specified by the last four digits of the telephone number comprises information regarding the telephone.

According to another embodiment of the invention, a method for storing information regarding a telephone is disclosed. A pointer is stored in an entry of a first look-up table wherein the line number of the entry is indexed by a first group of sequential digits, for example, the first six digits, of a telephone number of the telephone. Information regarding the telephone is stored in one of a plurality of second look-up tables, each table comprised of a plurality of entries wherein each entry is indexed by a second group of sequential digits, for example, the last four digits, of the telephone number, wherein said pointer indicates an address of said one of a plurality of second look-up tables wherein an entry with a line number specified by the last four digits of the telephone comprises information regarding said telephone.

### Brief Description of the Drawings

The foregoing summary of the invention, as well as the following detailed description of the preferred embodiments, is better understood when read in conjunction with the accompanying drawings, which are included by way of example, and not by way of limitation with regard to the claimed invention.
Figure 1 is a block diagram of a telecommunication system implementing one embodiment of the invention;
Figure 2 illustrates a business/residence bitmap lookup according to one embodiment of the invention;
Figure 3 illustrates a business/residence/unknown tritmap lookup according to one embodiment of the invention.

### Detailed Description

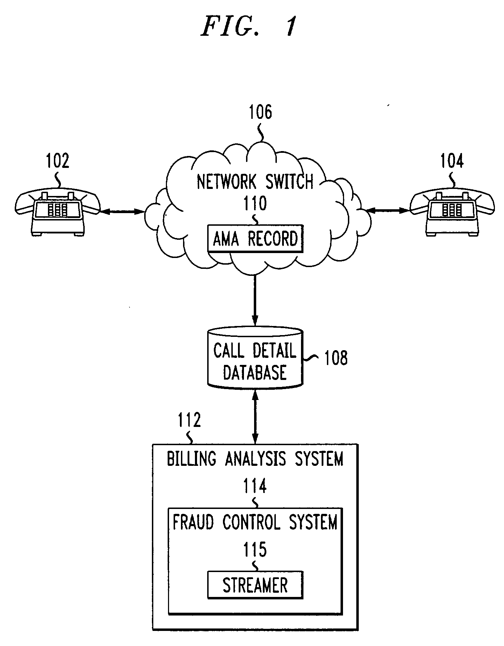

Referring to Figure 1 there is shown a block diagram of a telephone system in accordance with one embodiment of the present invention. There is shown a calling telephone 102, a called telephone 104, a telephone network switch 106 and a Call Detail Database (CDD) 108. An Automatic Message Accounting (AMA)record, represented by a block 110, is also shown. As indicated by the figure, a billable call may be initiated at telephone 102 and routed through switch 106,e.g., an AT&T 4ESS switch, to telephone 104. The switch generates the AMA record 110, which includes the information necessary to rate the call. The AMA record is passed to the CDD 108. It should be noted here that there are an abundance of protocols and transmission media that may be used for passing the data from the switch to the CDD. For example, suitable protocols include the well known File Transfer Protocol (FTP) and Transmission Control Protocol/Internet Protocol; and suitable transmission media include twisted shielded pair wires, fiber optic lines, coaxial cable, and wireless links. Moreover, these protocols and media are suitable for use in all data transfers and queries hereinafter described.

In any event, once the AMA record has been passed to the CDD, the AMA record is passed to a billing analysis system 112, which may be a general purpose computer capable of running the software necessary to implement the invention. The analysis system can be a billing analysis system, a fraud control system and/or some other system which is used to analyze call information. The analysis system applies any customer specific billing parameters to the AMA record to produce a processed AMA record.

A billing analysis system may include a fraud control system 114, but it will be understood that the fraud control system can be located at other places in the telephone network. The fraud control system gets a feed of the call detail records for all calls recorded on the telephone network from the CCD. The fraud control system processes those records using a streamer 115 that pulls up multiple subsets of the original stream of calls, wherein each subset typically involves a type of call such as international, credit card, etc., and processes each subset through routines that check for thresholds that may be exceeded. The result of exceeding a threshold may result in an alert signal being generated.

As set forth above, once the status has been determined by analyzing call records, the status needs to be stored in a manner that can be quickly and easily accessed. A constant-time data structure can be used to keep a bit of information per telephone number in the North American Numbering plan. The technique makes use of the sparseness of the NPA-NXXs assigned in the plan. The obvious fast data structure is to use a bit for each of the ten billion possible 10-digit phone numbers, occupying approximately 1.1 GB. One embodiment of the present invention uses a data structure with a pointer for each NPA-NXX which points to a bitmap for the 10,000 4-digit numbers within the NPA-NXX. No bitmaps are allocated for the NPA-NXXs that are not used. Empirically, this technique occupies approximately 100 MB and provides access in constant time. It will be understood that the pointer can be comprised of various numbers of sequential digits and the invention is not limited to the first six digits of the telephone number and the line number in the bitmap is not limited to the last four digits of the telephone number.

This method can be used to keep 3-level or higher statistics on phone numbers. An example is a trit-map where 3-levels are stored per phone number, business/residence/unknown. If a 3-level value is being stored, the information can be thought of as being encoded in the numbers 0, 1, and 2. For example, business=0, residence=1 and unknown=2. Multiple 3-level values can be stored in a single number. For example, if numbers a and b each can take on values from 0 to 2, then 3*a+b can be computed and stored as a single number c. Given c, the information about a and b can be retrieved by computing a=c/3 (integer division) and b=c mod 3. C takes on 9 values between 0 (if a and b are both zero) and 8 (if a and b are both 2). Similarly, k of these three-valued numbers can be packed in an integer which is less than 3^{k}. Since 3⁵=243, it is possible to store 5 of these 3-valued "trits" in an 8-bit byte of storage (a byte can hold 256 values).

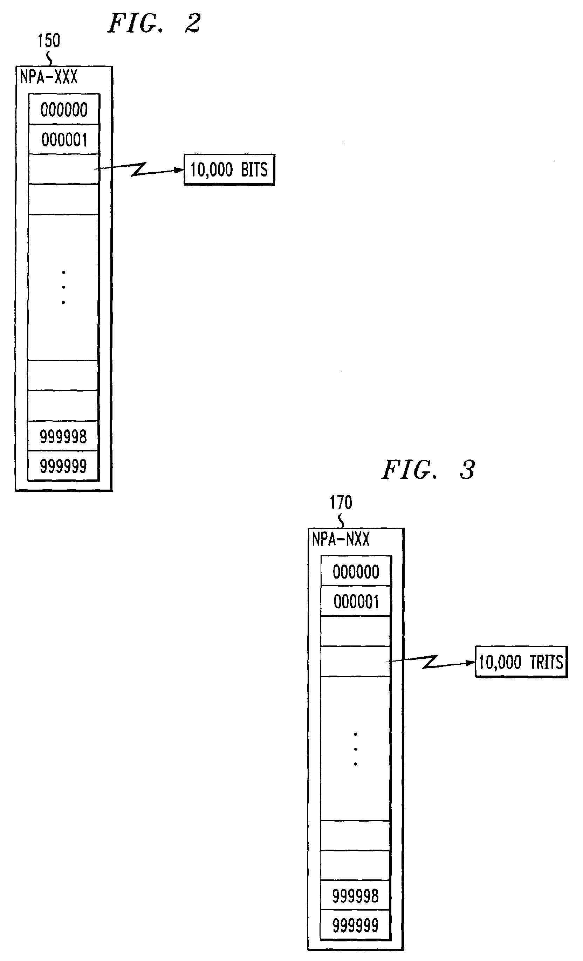

It will be understood by one skilled in the art that the bitmaps and tritmaps illustrated in Figures 2 and 3 can be used to store other characteristics about each telephone and the invention is not limited to the business/residence example described below. The stored information can be any combination of different characteristics, such as, for example, business telephone, residence telephone, big business telephone, small business telephone, fax machine, high toll residence, status unknown, etc.

Figure 2 illustrates a business/residence bitmap lookup according to one embodiment of the invention. A 1 million entry table 150 is indexed by the NPA-NXX. The entry contains zero if the NPA-NXX is not active and contains a 32-bit pointer to a 1250-byte area if the NPA-NXX is active. Line numbers 0000 to 9999 correspond to the 10,000 bits stored in 1250 bytes. To look up the residence/business status of a phone number (NPA-NXX-LINE) the NPA-NXX of the telephone number is used to tell which table entry to use. If the table entry is zero, then "unknown" is returned to the system. If the table entry is non-zero, it gives the address of the 1250-byte business/residence table for the NPA-NXX. According to one embodiment of the invention, to decode the bitmap, the line number is divided by 8 but the invention is not limited thereto. The integer quotient (0-1249) tells which byte to access. The remainder (0-7) tells which bit to access. If the bit is zero, the telephone number is a business and if the bit is a 1, the telephone number is a residence. Alternatively, it will be understood that the system can be set up so that if the bit is zero, the telephone number is a residence, and if the bit is a 1, the telephone number is a business. It will also be understood that 0 and 1 can be used to indicate any combination of two of the following characteristics business telephone, residence telephone, big business telephone, small business telephone, fax machine, high toll residence, status unknown, etc.

Figure 3 illustrates a business/residence tritmap lookup according to one embodiment of the invention. A 1 million entry table 170 is indexed by the NPA-NXX and contains zero if the NPA-NXX is not active and contains a 32-bit pointer to 2000-byte area if the NPA-NXX is active. The line numbers correspond to 10,000 trits (3-valued) stored in 2000 bytes. To look up residence/business/unknown status of a phone number (NPA-NXX-LINE) use NPA-NXX to tell which table entry to use. If the table entry is zero, then "unknown" is returned to the system. If the table entry is non-zero, it gives the address of the 2000-byte business/residence table for the NPA-NXX. According to one embodiment of the invention to decode the bitmap, the line number is divided by 5 but the invention is not limited thereto. The integer quotient (0-1999) tells which byte to pick up. The reminder, k is between 0 and 4. In this system, c=b/3^{k} mod 3. Thus, if c=0 the phone number is a business, if c=1, the phone number is a residence and if c=2 then the status of the phone number is not known. It will also be understood that 0, 1 and 2 can be used to indicate any combination of three of the following characteristics business telephone, residence telephone, big business telephone, small business telephone, fax machine, high toll residence, status unknown, etc.

While several different embodiments of the invention has been described, the invention can be expanded so as to be used with other multi-valued information such as 4-valued information, 5-valued information, etc. For example, 4-valued information could be stored in two bits, or 4 per byte. 5-valued information could be stored 3 per byte or 13 per 4 bytes.

Although preferred embodiments of the method and apparatus of the present invention have been illustrated in the accompanying Drawings and described in the foregoing Detailed Description, it is understood that the invention is not limited to the embodiments disclosed, but is capable of numerous rearrangements, modifications, and substitutions without departing from the spirit or scope of the invention as set forth and defined by the following claims.

## Claims

1. An apparatus for storing information regarding a telephone, comprising:
a first look-up table comprising a plurality of entries wherein each entry is indexed by a first group of sequential digits of a telephone number;
a plurality of second look-up tables comprising a plurality of entries wherein each entry is indexed by a second group of sequential digits of the telephone number;
and wherein at least one of said entries in said first look-up table comprises a pointer indicating the address of one of said plurality of second look-up tables, wherein an entry with a line number specified by the second group of digits of the telephone number comprises information regarding the telephone.

2. The apparatus according to claim 1, wherein said first group of sequential digits are the first six wherein said first group of sequential digits are the first six digits of the telephone number and the second group of sequential digits are the last four digits of the telephone number.

3. The apparatus according to claim 1, wherein said information indicates whether the telephone is a business telephone, residence telephone, big business telephone, small business telephone, fax machine, high toll residence, or status unknown.

4. The apparatus according to claim 3, wherein said information further indicates whether the telephone is used to make international calls.

5. The apparatus according to claim 1, wherein said plurality of second look-up tables are bitmaps.

6. The apparatus according to claim 5, wherein the location of said information in said second look-up table is determined by dividing the line number by 8 wherein an integer quotient identifies a byte to access and a remainder identifies which bit to access in the byte and the information is identified by whether the bit is a 0 or a 1.

7. The apparatus according to claim 5, wherein the location of said information in said second look-up table is determined by dividing the line number by a predetermined value wherein an integer quotient identifier a byte to access and a remainder identifier which bit to access in the byte and the information is identified by whether the bit is a 0 or a 1.

8. The apparatus according to claim 6, wherein a 0 and a 1 each represent a different one of business telephone, residence telephone, big business telephone, small business telephone, fax machine, high toll residence, and status unknown.

9. The apparatus according to claim 1, wherein the telephone is a business telephone if the bit is a 1 and the telephone is a residence telephone if the bit is a 0.

10. The apparatus according to claim 1, wherein said plurality of second look-up tables are tritmaps.

11. The apparatus according to claim 10, wherein the location of said information in said second look-up table is determined by dividing the line number by 5, wherein an integer quotient indicates which byte to access and a remainder (k) is used to determine a value c where c=b/3^{k} mod 3 and the information is identified by whether c equals 0, 1 or 2.

12. The apparatus according to claim 11, wherein 0, 1 and 2 each represent a differentone of business telephone, residence telephone, big business telephone, small business telephone, fax machine, high toll residence, and status unknown.

13. The apparatus according to claim 12, wherein the telephone is a business telephone if c=0, the telephone is a residence if c=1 and the status of the telephone is unknown if c=2.

14. A method for storing information regarding a telephone, comprising the steps of:
storing a pointer in an entry of a first look-up table wherein the line number of the entry is indexed by the first six digits of a telephone number of the telephone;
storing information regarding the telephone in one of a plurality of second look-up tables, each table comprised of a plurality of entries wherein each entry is indexed by the last four digits of the telephone number;
wherein said pointer indicates an address of said one of a plurality of second look-up tables wherein an entry with a line number specified by the last four digits of the telephone comprises information regarding said telephone.

15. The apparatus according to claim 2, wherein said first group of sequential digits are the first six digits of the telephone number and the second group of sequential digits are the last four digits of the telephone number.

16. The method according to claim 14, wherein said information indicates whether the telephone is a business telephone, residence telephone, big business telephone, small business telephone, fax machine, high toll residence, or status unknown.

17. The method according to claim 16, wherein said information further indicates whether the telephone is used to make international calls.

18. The method according to claim 14, wherein said plurality of second look-up tables are bitmaps.

19. The method according to claim 18, wherein the location of said information in said second look-up table is determined by dividing the line number by 8 wherein an integer quotient identifies a byte to access and a remainder identifies which bit to access in the byte and the information is identified by whether the bit is a 0 or a 1.

20. The apparatus according to claim 18, wherein the location of said information in said second look-up table is determined by dividing the line number by a predetermined value wherein an integer quotient identifies a byte to access and a remainder identifies which bit to access in the byte and the information is identified by whether the bit is a 0 or a 1.

21. The method according to claim 18, wherein a 0 and a 1 each represent a different one of business telephone, residence telephone, big business telephone, small business telephone, fax machine, high toll residence, and status unknown.

22. The method according to claim 14, wherein the telephone is a business telephone if the bit is a 1 and the telephone is a residence telephone if the bit is a 0.

23. The method according to claim 14, wherein said plurality of second look-up tables are tritmaps.

24. The method according to claim 23, wherein the location of said information in said second look-up table is determined by dividing the line number by 5, wherein an integer quotient indicates which byte to access and a remainder (k) is used to determine a value c where c=b/3^{k} mod 3 and the information is identified by whether c equals 0, 1 or 2.

25. The method according to claim 24, wherein 0, 1 and 2 each represent a different one of business telephone, residence telephone, big business telephone, small business telephone, fax machine, high toll residence, and status unknown.

26. The method according to claim 25, wherein the telephone is a business telephone if c=0, the telephone is a residence if c=1 and the status of the telephone is unknown if c=2.
